# FASCICULE DE BREVET EUROPEEN

(11) **EP 0 489 631 B1**
(45) Date de publication et mention de la délivrance du brevet: **12.03.1997**
(21) Numéro de dépôt: 91403241.2
(22) Date de dépôt: 29.11.1991
(51) Int. Cl.: B60S 1/52

(54) **Dispositif de lave-glace, pour mécanismes d'essuie-glace**
Scheibenwaschanlage für Scheibenwischermechanismen
Windscreen washer arrangement for windscreen wiper mechanisms

(30) Priorité: 03.12.1990 ES 9003075
(43) Date de publication de la demande: 10.06.1992
(73) Titulaire: VALEO SYSTEMES D'ESSUYAGE, 78180 Montigny-Le-Bretonneux (FR)
(72) Inventeur: Zarzoso Luis, Eduardo, E-08026 Barcelona (ES)
(74) Mandataire: Gamonal, Didier

(56) Documents cités:
- DE-A- 3 511 811
- FR-A- 2 107 598
- FR-A- 2 514 714
- GB-A- 966 176
- GB-A- 2 206 483

## Description

La présente invention a trait à un dispositif de lave-glace pour les mécanismes d'essuie-glace, notamment de véhicules automobiles.

Jusqu'à présent, les dispositifs de lave-glace pour mécanismes d'essuie-glace sont tous d'une grande complexité mécanique et présentant une faible garantie d'étanchéité, correspondant en général à deux types différents : d'une part, ceux qui projettent le liquide sur le pare-brise au même rythme que le mouvement du bras porte-raclette, et, d'autre part, ceux qui le projettent à partir de points stables dans une direction prédéterminée qui croise le trajet des raclettes.

Le plus courant du premier de ces dispositifs, consiste à monter un tube ou un gicleur fixé sur le bras porte-raclette, ou indépendant de celui-ci mais se déplaçant avec lui, alimenté grâce à un conduit approprié, flexible ou non, le gicleur projetant le liquide directement sur le pare-brise, selon le mouvement du bras. On peut citer, dans ce premier type, les brevets GB-A-410.259, US-A-2.866.996, US-A-3.234.579 ; et allemands DE-C-1.113.877 et DE-U-1.737.296.

Pour les systèmes à gicleur fixe, qui sont les plus courants, on peut citer les brevets français n° FR-A-1.082.114 , américain n° US-A-4.428.533 et allemands DE-B-1 244 596 et DE-A-2.537.471.

Il est également connu de GB-A-2206483 un dispositif d'arrosage, notamment pour mécanismes d'essuie-glace, dans lequel un gicleur est disposé sur le bras d'essuie-glace entraîné en rotation par un arbre moteur traversant une ouverture prévue dans la tôle de la carrosserie du véhicule, ledit dispositif comportant une pièce annulaire, en forme de douille, entourant l'arbre et disposée en regard de la face interne de la tôle de la carosserie, un conduit tubulaire disposé parallèlement à l'axe de la pièce et qui présente deux extrémités de raccordement pour les conduits d'alimentation et de sortie du liquide à projeter par le gicleur, une bague en forme de cuvette disposée sur la face externe de la tôle en entourant l'arbre moteur.

Tous ces brevets correspondent à des dispositifs plus ou moins complexes, qui n'assurent pas, en outre, une étanchéité absolue avec le temps. De plus, le montage et le démontage du dispositif pour d'éventuelles réparations est pénible.

L'invention permet de trouver une solution aux inconvénients des dispositifs mentionnés ci-dessus, en présentant un dispositif extrêmement simple, tant en ce qui concerne des premiers équipements qu'en cas de remplacement postérieur.

Conformément à l'invention, le dispositif d'arrosage, notamment pour mécanismes d'essuie-glace, dans lequel un gicleur est disposé sur le bras d'essuie-glace entraîné en rotation par un arbre moteur traversant une ouverture prévue dans la tôle de la carrosserie du véhicule, ledit dispositif comportant une pièce annulaire, en forme de douille, entourant l'arbre et disposée en regard de la face interne de la tôle de la carrosserie, un conduit tubulaire disposé parallèlement à l'axe de la pièce et qui présente deux extrémités de raccordement pour les conduits d'alimentation et de sortie du liquide à projeter par le gicleur, une bague en forme de cuvette disposée sur la face externe de la tôle en entourant l'arbre moteur (Dispositif du type divulgué par GB-A-2 206 483) est caractérisé en ce que la pièce annulaire est appliquée contre la tôle en interposant un joint lamellaire élastique d'étanchéité qui entoure l'ouverture prévue sur la tôle de la carrosserie, en ce que le conduit tubulaire traverse le joint lamellaire par un orifice et la tôle par un orifice, les orifices étant coaxiaux et en ce que l'orifice du joint lamellaire est doté d'une collerette en saillie qui est introduite dans l'orifice correspondant de la tôle et dont le diamètre interne est au plus égal à celui du conduit qui le traverse.

Avec ce système, la fixation de l'ensemble est extrêmement simplifiée ; de plus, il assure, non seulement une alimentation parfaite, suivant le mouvement du bras et de la raclette, mais aussi une étanchéité totale par rapport à la carrosserie du véhicule et à l'axe d'actionnement du bras.

De plus, le maintien de la pièce annulaire ou douille, évité contre la carrosserie, est réalisé grâce au corps tubulaire de l'élément moteur, contre lequel elle s'appuie, et grâce à une autre pièce annulaire complémentaire extérieure, assemblée autour d'un prolongement tubulaire de ce corps par lequel elle traverse l'arbre d'actionnement du mécanisme; elle est fermement fixée grâce à un écrou fileté sur un secteur en saillie taraudé extérieur à ce prolongement tubulaire.

La réunion entre le gicleur proprement dit et l'extrémité du conduit d'alimentation assemblé à la pièce annulaire de fixation, est effectuée, de manière avantageuse et selon une méthode déjà connue, grâce à un conduit flexible disposé amplement et de manière hélicoïdale autour du corps par lequel passe l'arbre moteur de façon à pouvoir suivre sans difficulté les déplacements du mécanisme.

Un autre avantage de l'invention résulte du fait que le conduit d'alimentation forme corps avec la pièce annulaire de fixation, qu'il fait partie de son matériau et qu'il a été formé au cours de la même opération de moulage d'une matière plastique adaptée. Cependant, il est également prévu que ce tube soit réalisé de manière indépendante, en métal par exemple, et qu'il soit incorporé à la pièce en question au cours du moulage de celle-ci ; les résultats pratiques obtenus du point de vue de sa fonction spécifique sont analogues.

Les autres caractéristiques et avantages ressortiront de la description et des dessins qui l'accompagnent. Ceux-ci, effectués de façon schématique et uniquement à titre d'exemple, sans aucun caractère limitatif, représentent un cas pratique de réalisation et de montage d'un dispositif d'arrosage selon l'invention et dans lesquels :
- la figure 1 est une vue en élévation et en section axiale de l'ensemble des éléments qui interviennent dans le dispositif ;
- la figure 2 correspond à une vue en coupe de l'ensemble du dispositif de lave-glace monté, selon la ligne II - II de la figure 3 ;
- la figure 3 correspond à une vue en plan de l'ensemble ;
- la figure 4 montre la pièce annulaire de fixation, en coupe axiale, selon une réalisation où le conduit d'alimentation est formé d'une pièce d'un matériau différent ;
- la figure 5 montre les ouvertures de la tôle de la carrosserie par lesquels passe l'ensemble.

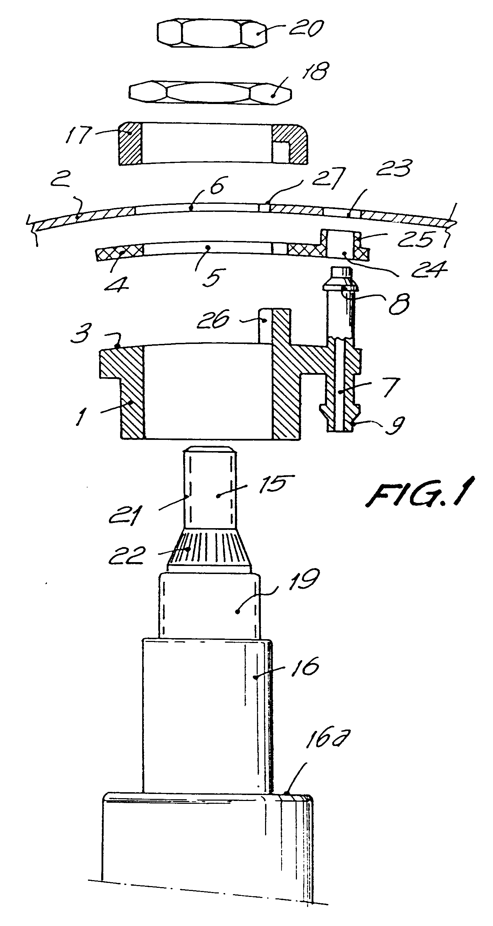

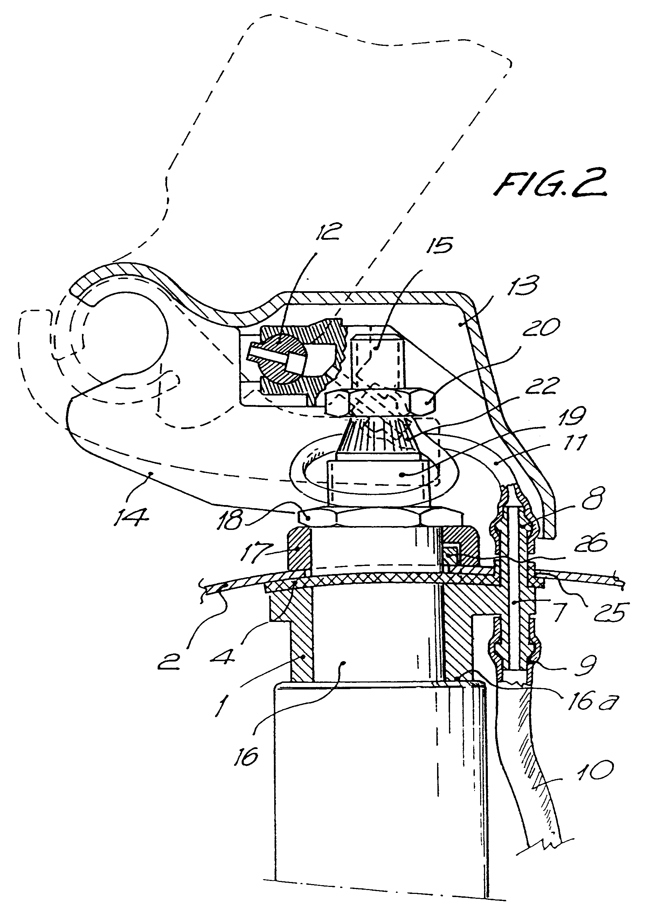

Comme on peut l'observer sur les dessins, notamment la vue éclatée de la figure 1, pour effectuer le montage, on a recours à une pièce annulaire en forme de douille 1, adaptable sur la face interne de la tôle 2 de la carrosserie du véhicule ; à cette fin, la face correspondante 3 de cette pièce 1 présente une surface incurvée ajustée à la courbe de la tôle 2.

La pièce 1 s'adapte contre la tôle 2, en intercalant un joint lamellaire d'étanchéité 4 qui présente une ouverture centrale 5 qui coïncide avec le diamètre interne de la pièce 1 et avec une ouverture 6 prévue dans la tôle de la carrosserie.

La pièce 1 présente un conduit 7, moulé dans son propre corps, destiné à l'alimentation du liquide de lavage, parallèle à l'axe de ladite pièce et qui comporte des ouvertures aux extrémités 8,9 pour l'accouplement des conduits interne 10 et externe 11 de l'alimentation du liquide au gicleur orientable 12. Ce gicleur est monté sur le corps du capuchon articulé 13 qui couvre l'extrémité d'assemblage de la fourche 14 du bras porte-raclette 14a sur l'arbre 15 du mécanisme moteur dudit bras.

Dans ce système, le gicleur proprement dit suit les mouvements du bras porte-raclette, de telle manière que le jet qu'il produit est toujours projeté dans la zone devant être lavée par la raclette.

L'arbre moteur 15 dépasse en le traversant un corps tubulaire 16 qui présente un épaulement 16a sur lequel s'appuie la pièce 1, le corps tubulaire 16 traversant la pièce 1, le joint 4 et la tôle 2 de la carrosserie.

L'ensemble est fixé à la carrosserie grâce à une bague en forme de cuvette 17, assemblée sur le corps tubulaire 16 et retenue contre la carrosserie par l'écrou 18, qui s'assemble dans le prolongement fileté de l'extrémité 19 du corps tubulaire 16, d'où dépasse l'arbre 15.

La fourche 14 est maintenue sur ledit arbre de manière conventionnelle grâce à l'écrou 20 qui s'assemble sur le filetage 21 de l'extrémité extérieure de l'arbre 15 et à travers la section conique moletée 22 de celui-ci.

La tôle 2 de la carrosserie présente en outre un orifice 23 qui correspond au conduit 7 afin de permettre à celui-ci de passer à l'extérieur. Un autre orifice analogue 24 est également prévu dans le joint lamellaire 4 ; il est pourvu, sur le bord de l'ouverture adossée à la tôle 2, d'une collerette en saillie 25, dont le diamètre externe correspond à celui de l'orifice 23 et le diamètre interne correspond ou est légèrement inférieur à celui des parois extérieures du conduit 7.

Dans l'exemple choisi, la pièce 1 présente, en saillie sur sa face adossable à la tôle 2, une saillie 26 accouplable à l'encoche 27 de l'ouverture 6 de la tôle 2 de la carrosserie en traversant une rainure du joint 4 pour le centrage et l'immobilisation de ladite pièce (figure 5).

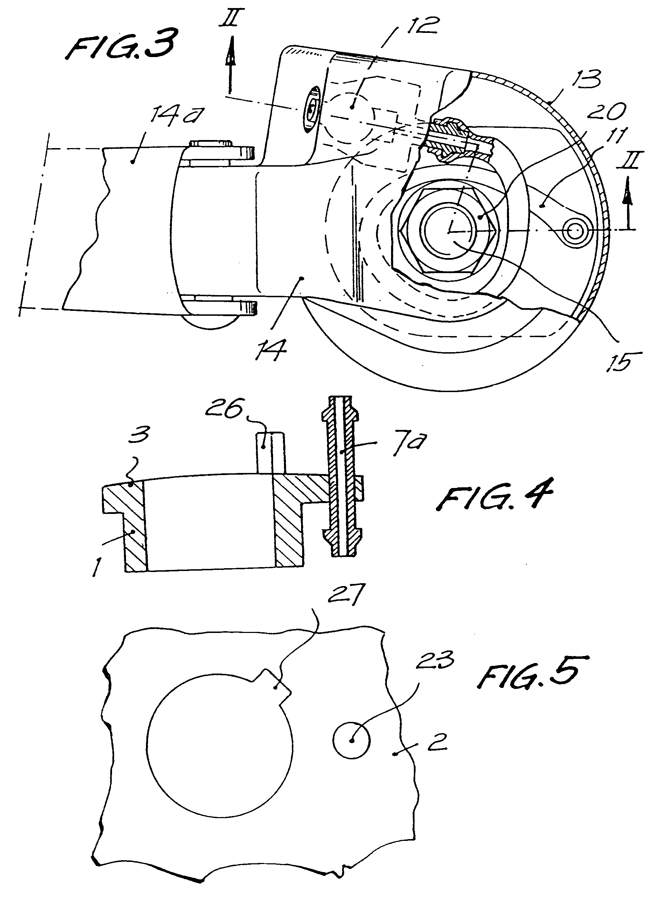

Comme on peut le voir dans les figures 2 et 3, le raccordement entre le conduit 7 et le gicleur 12, est effectué selon une méthode déjà connue, grâce au conduit flexible susmentionné 11, qui a une position ample et hélicoïdale autour du corps 16.

Dans les figures 1, 2 et 3, il est fait mention d'une pièce 1 qui comporte, par moulage dans sa propre matière, le conduit 7. Cependant, selon une variante de cette réalisation, comme indiqué dans la figure 4, le conduit 7a est formé d'une pièce indépendante, d'un matériau différent, unie au corps de la pièce 1 au cours du moulage de cette dernière. Par exemple, la pièce 1 peut être faite dans une matière plastique appropriée, alors que le conduit 7a sera formé d'un matériau métallique convenablement usiné. Dans les deux cas, les résultats pratiques pour ce qui concerne les fonctions dudit conduit, sont exactement les mêmes.

Ainsi, le montage de l'ensemble du dispositif d'arrosage présente les avantages suivants :
a) d'une part, la constitution et l'assemblage de ces éléments est d'une simplicité absolue, elles ne nécessitent pas d'opérations spéciales ;
b) l'étanchéité de l'assemblage est assurée, grâce à la présence du joint lamellaire 4, pressé contre la carrosserie par l'écrou 18 qui, avec l'épaulement 16a du corps 16, serrent l'un contre l'autre la pièce 1, le joint 4, la tôle 2 et la bague 17, immobilisant complètement l'ensemble qui devient solidaire du corps fixe 16 de l'élément moteur du mécanisme ;
c) l'étanchéité est obtenue grâce au passage du conduit 7 dans l'orifice 24 du joint lamellaire 4 et dans l'orifice 23 de la tôle 2 de la carrosserie. Elle est également obtenue grâce à la collerette 25 qui entoure ledit orifice, étant donné que, en serrant l'écrou, cela provoque la déformation dudit joint et cela entoure parfaitement l'extérieur du conduit 7. Ceci empêchera toute pénétration de liquide.

Comme on le comprendra, ce système de montage peut s'appliquer à un type quelconque de mécanisme d'essuie-glace du type indiqué. De plus, il est très adapté pour le montage sur des équipements neufs étant donné sa facilité de placement initial, à quoi il faut ajouter la facilité que représente son montage ou démontage éventuel en cas de panne ou de remplacement du mécanisme.

## Revendications

1. Dispositif d'arrosage, notamment pour mécanismes d'essuie-glace, dans lequel un gicleur (12) est disposé sur le bras d'essuie-glace (13,14,14a) entraîné en rotation par un arbre moteur (15) traversant une ouverture (6) prévue dans la tôle (2) de la carrosserie du véhicule, ledit dispositif comportant une pièce annulaire (1), en forme de douille, entourant l'arbre (15) et disposée en regard de la face interne de la tôle (2) de la carrosserie, un conduit tubulaire (7) disposé parallèlement à l'axe de la pièce (1) et qui présente deux extrémités de raccordement (8,9) pour les conduits d'alimentation (10) et de sortie (11) du liquide à projeter par le gicleur (12), une bague en forme de cuvette (17) disposée sur la face externe de la tôle (2) en entourant l'arbre moteur (15) caractérisé en ce que la pièce annulaire (1) est appliquée contre la tôle (2) en interposant un joint lamellaire élastique d'étanchéité (4) qui entoure l'ouverture (6) prévue sur la tôle (2) de la carrosserie, en ce que le conduit tubulaire (7) traverse le joint lamellaire (4) par un orifice (24) et la tôle par un orifice (23), les orifices (23,24) étant coaxiaux et en ce que l'orifice (24) du joint lamellaire (4) est doté d'une collerette (25) en saillie qui est introduite dans l'orifice correspondant (23) de la tôle (2) et dont le diamètre interne est au plus égal à celui du conduit (7) qui le traverse.

2. Dispositif d'arrosage selon la revendication 1, caractérisé en ce que le conduit (7) est d'un seul tenant avec la pièce tubulaire (1).

3. Dispositif d'arrosage selon la revendication 2, caractérisé en ce que le conduit (7) et la pièce (1) sont élaborés à partir du même matériau.

4. Dispositif d'arrosage selon la revendication 1, caractérisé en ce que le conduit (7) est formé de façon indépendante de la pièce tubulaire (1).

5. Dispositif d'arrosage selon la revendication 4, caractérisé en ce que la pièce tubulaire (1) est surmoulée sur le conduit (7).

6. Dispositif d'arrosage selon d'une des revendications précédentes, caractérisé en ce que la pièce tubulaire (1) présente une saillie (26)coopérant avec une encoche (27) prévue sur la tôle (2) pour permettre son indexation.

## Claims

1. Spraying device, notably for windscreen wiper mechanisms, in which a spray nozzle (12) is disposed on the windscreen wiper arm (13, 14, 14a) rotated by a drive shaft (15) passing through an opening (6) provided in the sheet metal (2) of the bodywork of the vehicle, the said device having an annular part (1), in the form of a bush, surrounding the shaft (15) and disposed opposite the internal surface of the sheet metal (2) of the bodywork, a tubular pipe (7) disposed parallel to the axis of the part (1) and which has two ends (8, 9) for connecting the feed (10) and outlet (11) pipes for the liquid to be sprayed by the spray nozzle (12), a ring in the shape of a bowl (17) disposed on the external surface of the sheet metal (2), surrounding the drive shaft (15), characterised in that the annular part (1) is applied against the sheet metal (2) by interposing an elastic lamellar joint (4) which surrounds the opening (6) provided on the sheet metal (2) of the bodywork, in that the tubular pipe (7) passes through the lamellar joint (4) via an orifice (24) and through the sheet metal via an orifice (23), the orifices (23, 24) being coaxial, and in that the orifice (24) of the lamellar joint (4) is equipped with a projecting collar (25) which is introduced into the corresponding orifice (23) of the sheet metal (2) and whose internal diameter is at the most equal to that of the pipe (7) which passes through it.

2. Spraying device according to Claim 1, characterised in that the pipe (7) is in one piece with the tubular part (1).

3. Spraying device according to Claim 2, characterised in that the pipe (7) and the part (1) are made from the same material.

4. Spraying device according to Claim 1, characterised in that the pipe (7) is formed independently of the tubular part (1).

5. Spraying device according to Claim 4, characterised in that the tubular part (1) is moulded onto the pipe (7).

6. Spraying device according to one of the preceding claims, characterised in that the tubular part (1) has a projection (26) cooperating with a notch (27) provided on the sheet metal (2) to enable it to be located.

## Patentansprüche

1. Scheibenwaschanlage, insbesondere für Scheibenwischermechanismen, bei der eine Spritzdüse (12) auf dem Scheibenwischerarm (13, 14, 14a) angeordnet ist, der von einer durch eine Öffnung (6) im Blech (2) der Fahrzeugkarosserie hindurchgehenden Antriebswelle (15) drehend angetrieben wird, wobei die besagte Anlage ein ringförmiges Teil (1) in Form einer Hülse umfaßt, das die Welle (15) umschließt und gegenüber der Innenseite des Karosserieblechs (2) angeordnet ist, sowie eine parallel zur Achse des Teils (1) angeordnete Rohrleitung (7), die zwei Enden (8, 9) für den Anschluß der Zuleitungskanäle (10) und den Austritt (11) der durch die Düse (12) aufzuspritzenden Flüssigkeit aufweist, und einen schalenförmigen Ring (17), der an der Außenseite des Blechs (2) angeordnet ist und die Antriebswelle (15) umschließt , **dadurch gekennzeichnet,** daß das ringförmige Teil (1) am Blech (2) unter Einfügung einer elastischen Lamellendichtung (4) angebracht wird, welche die am Karosserieblech (2) vorgesehene Öffnung (6) umschließt, daß die Rohrleitung (7) durch die Lamellendichtung (4) durch eine entsprechende Öffnung (24) und durch das Blech (2) durch eine entsprechende Öffnung (23) hindurchgeht, wobei die Öffnungen (23, 24) koaxial verlaufen, und daß die Öffnung (24) der Lamellendichtung (4) mit einem vorspringenden Kragen (25) versehen ist, der in die entsprechende Öffnung (23) im Blech eingesetzt wird und dessen Innendurchmesser höchstens gleich dem Durchmesser des durch ihn hindurchgenenden Zuleitungskanals (7) ist.

2. Scheibenwaschanlage nach Anspruch 1 , **dadurch gekennzeichnet,** daß der Zuleitungskanal (7) einstückig mit dem rohrförmigen Teil (1) ausgeführt ist.

3. Scheibenwaschanlage nach Anspruch 2 , **dadurch gekennzeichnet,** daß der Zuleitungskanal (7) und das Teil (1) aus dem gleichen Werkstoff hergestellt werden.

4. Scheibenwaschanlage nach Anspruch 1, **dadurch gekennzeichnet,** daß der Zuleitungskanal (7) unabhängig von dem rohrförmigen Teil (1) ausgeführt ist.

5. Scheibenwaschanlage nach Anspruch 4 , **dadurch gekennzeichnet,** daß das rohrförmige Teil (1) am Zuleitungskanal (7) aufgeformt ist.

6. Scheibenwaschanlage nach einem der vorangehenden Ansprüche, **dadurch gekennzeichnet,** daß das rohrförmige Teil (1) einen Vorsprung (26) aufweist, der mit einer Ausklinkung (27) zusammenwirkt, die am Blech (2) vorgesehen ist, um seine Vorpositionierung zu ermöglichen.
